# EUROPÄISCHE PATENTSCHRIFT

(11) **EP 2 850 337 B1**
(45) Veröffentlichungstag und Bekanntmachung des Hinweises auf die Patenterteilung: **12.06.2019**
(21) Anmeldenummer: 13719074.0
(22) Anmeldetag: 23.04.2013
(51) Int. Cl.: F16F 15/14

(54) **PENDELROLLE FÜR EINE FLIEHKRAFTPENDELEINRICHTUNG UND FLIEHKRAFTPENDELEINRICHTUNG MIT EINER DERARTIGEN PENDELROLLE**
PENDULUM ROLLER FOR A CENTRIFUGAL FORCE PENDULUM DEVICE AND CENTRIFUGAL FORCE PENDULUM DEVICE HAVING SUCH A PENDULUM ROLLER
GALET PENDULAIRE POUR DISPOSITIF À PENDULE CENTRIFUGE ET DISPOSITIF À PENDULE CENTRIFUGE COMPRENANT UN GALET PENDULAIRE DUDIT TYPE

(30) Priorität: 16.05.2012 DE 102012208265
(43) Veröffentlichungstag der Anmeldung: 25.03.2015
(73) Patentinhaber: Schaeffler Technologies AG & Co. KG, 91074 Herzogenaurach (DE)
(72) Erfinder: GRAHL, Uwe, 77815 Bühl (DE); STARK, Richard, 76534 Baden-Baden (DE)
(86) Internationale Anmeldenummer: PCT/EP2013/058336
(87) Internationale Veröffentlichungsnummer: WO 2013/171032

(56) Entgegenhaltungen:
- EP-A1- 1 865 222
- DE-A1-102006 028 552
- DE-A1-102010 029 464
- DE-A1-102011 101 137

## Beschreibung

Die Erfindung betrifft eine Pendelrolle für eine Fliehkraftpendeleinrichtung mit wenigstens einer Pendelmasse und einem Pendelmasseträgerteil aufweisend eine Pendelrollendrehachse, zwei erste Rollenabschnitte und einen in Erstreckungsrichtung der Pendelrollendrehachse zwischen den ersten Rollenabschnitten angeordneten zweiten Rollenabschnitt sowie eine Fliehkraftpendeleinrichtung, insbesondere für einen Antriebsstrang eines brennkraftmaschinengetriebenen Kraftfahrzeugs, aufweisend ein um eine Drehachse drehbares Pendelmassenträgerteil und wenigstens eine an dem Pendelmassenträgerteil unter Fliehkrafteinwirkung verlagerbar angeordnete Pendelmasse.

Aus der DE 10 2006 028 556 A1 ist eine Drehmomentübertragungseinrichtung bekannt im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung, bei der die Laufrollen jeweils mindestens einen Bund aufweisen, der unter Fliehkrafteinwirkung auf die Pendelmasse in axialer Richtung zwischen der Pendelmasse und der Pendelmassenträgereinrichtung angeordnet ist, um die Drehmomentübertragungseinrichtung, insbesondere im Hinblick auf die im Betrieb auftretende Geräuschentwicklung, zu optimieren. Die DE 10 2010 029 464 A1 offenbart eine Fliehkraftpendeleinrichtung, bei der die Pendelrolle eine fassartige Form aufweist.

Der Erfindung liegt die Aufgabe zugrunde, eine eingangs genannte Pendelrolle baulich und/oder funktional zu verbessern und eine baulich und/oder funktional verbesserte Fliehkraftpendeleinrichtung bereit zu stellen.

Die Lösung der Aufgabe erfolgt mit einer Pendelrolle für eine Fliehkraftpendeleinrichtung mit wenigstens einer Pendelmasse und einem Pendelmasseträgerteil aufweisend eine Pendelrollendrehachse, zwei erste Rollenabschnitte und einen in Erstreckungsrichtung der Pendelrollendrehachse zwischen den ersten Rollenabschnitten angeordneten zweiten Rollenabschnitt, bei der die Pendelrolle eine fassartige Form aufweist, wobei die ersten Rollenabschnitte jeweils eine kegelstumpfartige Form mit einer Mantelfläche aufweisen, die eine Rollfläche des jeweiligen ersten Rollenabschnitts bildet, und der zweite Rollenabschnitt kann eine zylinderartige Form mit einer Mantelfläche aufweisen, die eine Rollfläche des zweiten Rollenabschnitts bildet.

Die Pendelrolle kann zur verlagerbaren Anordnung der wenigstens einen Pendelmasse an dem Pendelmassenträgerteil dienen. Die Pendelrolle kann eine tonnenartige Form aufweisen. Die Pendelrolle kann eine walzenartige Form aufweisen. Die Form der Pendelrolle erlaubt ein einfaches Rollen. Die Form der Pendelrolle erlaubt ein einfaches Anpassen einer Rollrichtung während des Rollens. Die Pendelrollendrehachse kann zu einer Drehachse der Fliehkraftpendeleinrichtung parallel anordenbar sein. Die ersten Rollenabschnitte können jeweils einen kleineren Durchmesser als der zweite Rollenabschnitt aufweisen. Die ersten Rollenabschnitte und der zweite Rollenabschnitt können zumindest annähernd gleiche Durchmesser aufweisen. Die Pendelrolle mit den ersten Rollenabschnitten und dem zweiten Rollenabschnitt kann einstückig ausgebildet sein.

Die erfindungsgemäße Pendelrolle ermöglicht eine Zentrierung der Pendelrolle insbesondere bei einem Drehen der Pendelrolle um die Pendelrollendrehachse. Bei einem Betrieb nimmt die Pendelrolle eine Sollposition ein und behält die Sollposition bei. Ein Verschleiß ist reduziert. Die Pendelrolle ist insbesondere zum Einsatz bei hohen Relativgeschwindigkeiten zwischen dem Pendelmasseträgerteil und/oder der wenigstens einen Pendelmasse einerseits und der Pendelrolle andererseits geeignet.

Die ersten Rollenabschnitte können jeweils eine kegelstumpfartige Form mit eine Grundfläche und einer Deckfläche aufweisen und die Grundflächen können jeweils zu dem zweiten Rollenabschnitt hin gerichtet sein. Die ersten Rollenabschnitte können jeweils eine kegelstumpfartige Form mit einer Neigung von ca. 1:10 bis ca. 1: 50, insbesondere von ca. 1:20 bis ca. 1:40, aufweisen. Die Rollflächen der ersten Rollenabschnitte und/oder des zweiten Rollenabschnitts können in Erstreckungsrichtung der Pendelrollendrehachse jeweils eben, konkav oder konvex geformt sein.

Zwischen den ersten Rollenabschnitten und dem zweiten Rollenabschnitt kann jeweils ein Bund angeordnet sein. Die Bunde können die ersten Rollenabschnitte und den zweiten Rollenabschnitt in Erstreckungsrichtung der Pendelrollendrehachse voneinander abgrenzen. Die Bunde können jeweils eine nach radial außen abnehmende Breite aufweisen.

Die ersten Rollenabschnitte können der wenigstens einen Pendelmasse zugeordnet und der zweite Rollenabschnitt kann dem Pendelmasseträgerteil zugeordnet sein. Diese Pendelrolle kann zur Verwendung mit einer zweiteiligen Pendelmasse dienen. Die ersten Rollenabschnitte können dem Pendelmasseträgerteil zugeordnet und der zweite Rollenabschnitt kann der wenigstens einen Pendelmasse zugeordnet sein. Diese Pendelrolle kann zur Verwendung mit einem Pendelmasseträgerteil, das eine Pendelmasse umgreift, dienen.

Die Lösung der Aufgabe erfolgt außerdem mit einer Fliehkraftpendeleinrichtung, insbesondere für einen Antriebsstrang eines brennkraftmaschinengetriebenen Kraftfahrzeugs, aufweisend ein um eine Drehachse drehbares Pendelmassenträgerteil und wenigstens eine an dem Pendelmassenträgerteil unter Fliehkrafteinwirkung verlagerbar angeordnete Pendelmasse, bei der die wenigstens eine Pendelmasse mithilfe wenigstens einer Pendelrolle nach einem der Ansprüche 1 bis 5 an dem Pendelmassenträgerteil geführt ist. Mithilfe der Fliehkraftpendeleinrichtung kann eine Kompensation von Drehungleichförmigkeiten verbessert sein. Derartige Drehungleichförmigkeiten können insbesondere aufgrund periodisch ablaufender Verbrennungsvorgänge in einer Brennkraftmaschine auftreten. Der Antriebsstrang kann einen Drehschwingungsdämpfer aufweisen. Der Drehschwingungsdämpfer kann ein Flanschteil aufweisen. Der Drehschwingungsdämpfer kann ein Eingangsteil und ein Ausgangsteil aufweisen. Das Eingangsteil des Drehschwingungsdämpfers kann einer Brennkraftmaschine zugeordnet sein. Das Ausgangsteil des Drehschwingungsdämpfers kann einer Reibungskupplung zugeordnet sein. Das Ausgangsteil des Drehschwingungsdämpfers kann ein Flanschteil aufweisen. Der Drehschwingungsdämpfer kann ein Zweimassenschwungrad sein. Der Antriebsstrang kann eine Reibungskupplung aufweisen. Die Reibungskupplung kann ein Flanschteil aufweisen. Die Reibungskupplung kann eine Kupplungsscheibe aufweisen. Der Antriebsstrang kann einen Drehmomentwandler aufweisen. Der Drehmomentwandler kann ein Flanschteil aufweisen. Das Flanschteil der Reibungskupplung kann das Pendelmassenträgerteil sein. Die Kupplungsscheibe der Reibungskupplung kann das Pendelmassenträgerteil sein. Das Flanschteil des Drehschwingungsdämpfers kann das Pendelmassenträgerteil sein. Das Flanschteil des Ausgangsteils des Drehschwingungsdämpfers kann das Pendelmassenträgerteil sein. Das Flanschteil des Drehmomentwandlers kann das Pendelmassenträgerteil sein.

Die wenigstens eine Pendelmasse kann entlang einer Pendelrollenbahn führbar sein. Die Pendelrollenbahn kann an dem Pendelmassenträgerteil angeordnet sein. Die Pendelrollenbahn kann mithilfe wenigstens eines Durchbruchs gebildet sein. Der wenigstens eine Durchbruch kann eine nierenartige Form aufweisen. Der wenigstens eine Durchbruch kann an dem Pendelmassenträgerteil angeordnet sein. Der wenigstens eine Durchbruch kann an der wenigstens einen Pendelmasse angeordnet sein. Die wenigstens eine Pendelmasse kann entlang einer vorgegebenen Bahn verlagerbar sein. Die wenigstens eine Pendelmasse kann zwischen einer ersten Endlage und einer zweiten Endlage verlagerbar sein. Die wenigstens eine Pendelmasse kann zur Drehachse der Fliehkraftpendeleinrichtung exzentrisch angeordnet sein. Die Fliehkraftpendeleinrichtung kann mehrere, insbesondere zwei, drei oder vier Pendelmassen aufweisen. Die wenigstens eine Pendelmasse kann eine kreisringbogenartige Form aufweisen. Die kreisringbogenartige Form der wenigstens einen Pendelmasse kann sich über einen Mittelpunktswinkel von ca. 160°-190°, insbesondere von ca. 180°, erstrecken. Die kreisringbogenartige Form der wenigstens einen Pendelmasse kann sich über einen Mittelpunktswinkel von ca. 100°-130°, insbesondere von ca. 120°, erstrecken. Die kreisringbogenartige Form der wenigstens einen Pendelmasse kann sich über einen Mittelpunktswinkel von ca. 70°-100°, insbesondere von ca. 90°, erstrecken.

Die wenigstens eine Pendelmasse kann ein einziges Pendelmasseteil aufweisen. Das Pendelmasseteil kann wenigstens einen Durchbruch zur Bildung einer Pendelrollenbahn aufweisen. Das Pendelmasseteil kann zwei Durchbrüche zur Bildung einer Pendelrollenbahn aufweisen. Das Pendelmasseteil kann in Erstreckungsrichtung der Drehachse von dem Pendelmassenträgerteil eingefasst sein.

Die wenigstens eine Pendelmasse kann zwei Pendelmasseteile aufweisen. Die Pendelmasseteile können jeweils wenigstens einen Durchbruch zur Bildung einer Pendelrollenbahn aufweisen. Die Pendelmasseteile können jeweils zwei Durchbrüche zur Bildung einer Pendelrollenbahn aufweisen. Die zwei Pendelmasseteile der wenigstens einen Pendelmasse können einander in Erstreckungsrichtung der Drehachse gegenüberliegend angeordnet sein. Die zwei Pendelmasseteile der wenigstens einen Pendelmasse können einander gegenüberliegend beidseits des Pendelmassenträgerteils angeordnet sein. Die zwei Pendelmasseteile der wenigstens einen Pendelmasse können mit ihren Pendelrollenbahnen fluchtend angeordnet sein. Die zwei Pendelmasseteile der wenigstens einen Pendelmasse können miteinander fest verbunden sein. Die zwei Pendelmasseteile der wenigstens einen Pendelmasse können miteinander vernietet sein.

Das Pendelmassenträgerteil kann für jede Pendelmasse wenigstens einen Durchbruch zur Bildung einer Pendelrollenbahn aufweisen. Das Pendelmassenträgerteil kann für jede Pendelmasse zwei Durchbrüche zur Bildung einer Pendelrollenbahn aufweisen. Die Fliehkraftpendeleinrichtung kann für jede Pendelmasse wenigstens eine Pendelrolle aufweisen. Die Fliehkraftpendeleinrichtung kann für jede Pendelmasse zwei Pendelrollen aufweisen.

Das Pendelmassenträgerteil und/oder die wenigstens eine Pendelmasse kann wenigstens eine Durchbrechung zur Aufnahme eines ersten Rollenabschnitts der wenigstens einen Pendelrolle aufweisen und die Durchbrechung kann einen verrundeten Rand aufweisen. Die Durchbrechung kann in einem Stanzverfahren hergestellt sein. Es kann ein einem Bund der Pendelrolle zugewandter Rand der Durchbrechung verrundet sein. Der Rand kann durch Unformen verrundet sein. Der Rand kann mithilfe eines Stanzeinzugs bei einer Herstellung der Durchbrechung verrundet sein.

Zusammenfassend und mit anderen Worten dargestellt ergeben sich somit durch die Erfindung unter anderem Fliehkraftpendelrollen im Doppelkegel-Design. Eine Zylinderrolle kann als Doppelkegel ausgeführt sein. Körperkanten, die auf der Rolle laufen, können nicht scharfkantig ausgeführt sein. Körperkanten, die auf der Rolle laufen, können abgerundet ausgeführt sein. Eine Scharfkantigkeit kann mithilfe eines Stanzeinzugs vermieden sein. Ein Kegelwinkel kann relativ gering sein. Eine Neigung eines Kegelwinkels kann 1:20 bis 1:40 betragen. Eine Lauffläche in der Mitte kann eben, konkav oder konvex ausgeführt sein. Gleiches kann für Kegelmantelflächen links und rechts gelten.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend wird ein Ausführungsbeispiel der Erfindung unter Bezugnahme auf Figuren näher beschrieben. Aus dieser Beschreibung ergeben sich weitere Merkmale und Vorteile. Konkrete Merkmale dieses Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: eine Fliehkraftpendeleinrichtung mit einem Pendelmassenträgerteil und Pendelmassen, die mithilfe von Pendelrollen an dem Pendelmassenträgerteil geführt sind, in Draufsicht,
- Fig. 2: eine Fliehkraftpendeleinrichtung mit einem Pendelmassenträgerteil und Pendelmassen, die mithilfe von Pendelrollen an dem Pendelmassenträgerteil geführt sind in Schnittansicht entlang der in Fig. 1 mit II-II bezeichneten Linie und
- Fig. 3: eine fassartig geformte Pendelrolle für eine Fliehkraftpendeleinrichtung.

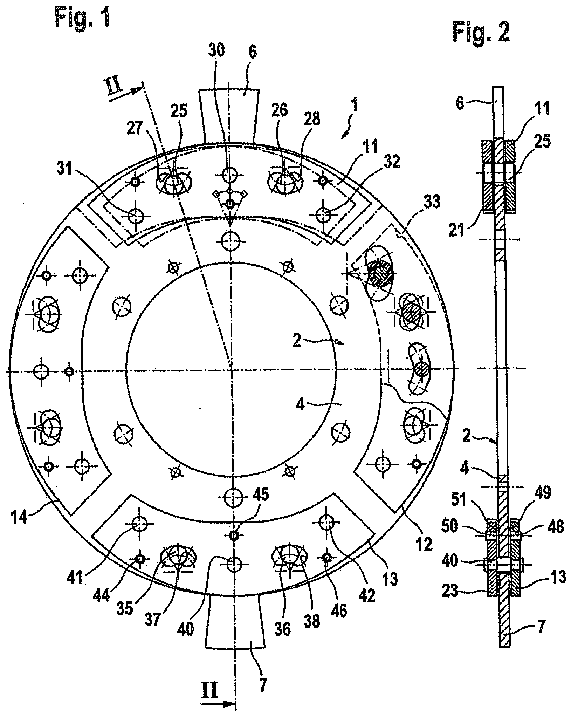

Fig. 1 zeigt eine Fliehkraftpendeleinrichtung 1 mit einem Pendelmassenträgerteil 2 und Pendelmassen 11, 12, 13 14, die mithilfe von Pendelrollen 25, 26, 35, 36 an dem Pendelmassenträgerteil 2 geführt sind, in der Draufsicht. Das Pendelmassenträgerteil 2 weist im Wesentlichen die Gestalt einer Kreisringscheibe 4 auf. Von der Kreisringscheibe 4 erstrecken sich zwei diametral angeordnete Ansätze 6, 7 radial nach außen. Die Ansätze 6, 7 weisen Anlageflächen für (nicht dargestellte) Bogenfedern eines Drehschwingungsdämpfers auf. Das Pendelmassenträgerteil 2 hat gleichzeitig die Funktion eines Ausgangsteils eines Drehschwingungsdämpfers und wird auch als Flansch bezeichnet.

Auf der in Fig. 1 sichtbaren Oberfläche der Kreisringscheibe 4 sind vier Pendelmassen 11, 12, 13, 14 begrenzt bewegbar an dem Pendelmassenträgerteil 2 angebracht. Fig. 2 zeigt eine Schnittansicht entlang der in Fig. 1 mit II-II bezeichneten Linie. In der Schnittansicht sieht man, dass jeweils zwei Pendelmasseteile 11, 21, 13, 23 paarweise gegenüberliegend an dem Pendelmassenträgerteil 2 angebracht sind.

Die Bewegung der Pendelmasseteile 11, 21 einer Pendelmasse wird, wie in Fig. 1 gezeigt ist, durch Pendelrollen 25, 26 ermöglicht, die in Laufbahnen 27, 28 geführt sind, die wiederum in der zugehörigen Pendelmasse 11 ausgespart sind. Die Laufbahnen 27, 28 werden von Durchgangslöchern gebildet, die sich in axialer Richtung durch die Pendelmasse 11 hindurch erstrecken und die Gestalt von Langlöchern aufweisen, die nierenförmig gekrümmt sind. Zur Anbringung der Pendelmasseteile 11, 21 an dem Pendelmassenträgerteil 2 sind des Weiteren drei Stufenbolzen 30 bis 32 vorgesehen. Innerhalb eines gestrichelten Aufbruchs 33 sieht man, dass in der Kreisringscheibe 4 ebenfalls nierenförmig gekrümmte Langlöcher zur Aufnahme der Stufenbolzen ausgebildet sind.

Die Pendelmasse 13 ist mit Hilfe von Pendelrollen 35, 36 an dem Pendelmassenträgerteil 2 angebracht. Die Bewegung der Pendelrollen 35, 36 wird durch Laufbahnen 37, 38 begrenzt. Des Weiteren sind wie bei den anderen Pendelmassen drei Stufenbolzen 40 bis 42 vorgesehen. Die Pendelrollen 35, 36 und die Stufenbolzen 40 bis 42 dienen dazu, die Bewegung der Pendelmasseteile 13, 23 in der Zeichenebene, also in radialer Richtung und in Umfangsrichtung zu begrenzen und zu definieren. Darüber hinaus sind an den Pendelmasseteilen 13, 23 noch jeweils drei axiale Anlaufelemente 44 bis 46 angebracht. In Fig. 2 sieht man, dass die axialen Anlaufelemente, die an den Pendelmasseteilen 13, 23 angebracht sind, jeweils einen Bolzen 48, 50 mit einem Bolzenkopf 49, 51 aufweisen, der in axialer Richtung zwischen den Pendelmasseteilen 13, 23 und der Kreisringscheibe 4 des Pendelmassenträgerteils 2 angeordnet ist. Die axialen Anlaufelemente 44 bis 46 sind vorzugsweise aus Kunststoff gebildet, und dienen dazu, Geräusche zu reduzieren, die entstehen, wenn die Pendelmasseteile 13, 23 in axialer Richtung an der Kreisringscheibe 4 des Pendelmassenträgerteils 2 anschlagen.

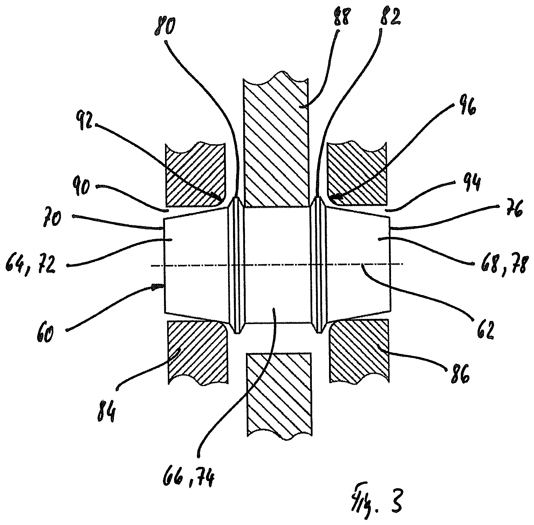

Fig. 3 zeigt eine fassartig geformte Pendelrolle 60, wie Pendelrolle 25, 26, 35, 36 gemäß Fig. 1 oder Fig. 2, für eine Fliehkraftpendeleinrichtung, wie Fliehkraftpendeleinrichtung 1 gemäß Fig. 1 und Fig. 2. Die Pendelrolle 60 weist eine Pendelrollendrehachse 62 auf. Die Pendelrolle 60 weist einen kegelstumpfartig geformten Rollenabschnitt 64 auf. Der Rollenabschnitt 64 ist ein erster Rollenabschnitt der Pendelrolle 60. Die Pendelrolle 60 weist einen zylinderartig geformten Rollenabschnitt 66 auf. Der Rollenabschnitt 66 ist ein zweiter Rollenabschnitt der Pendelrolle 60. Die Pendelrolle 60 weist einen kegelstumpfartig geformten Rollenabschnitt 68 auf. Der Rollenabschnitt 68 ist ein erster Rollenabschnitt der Pendelrolle 60.

Der Rollenabschnitt 64 weist eine kreiskegelstumpfartige Form auf. Der Rollenabschnitt 64 weist eine Grundfläche, eine Deckfläche und eine Mantelfläche auf. Die Deckfläche des Rollenabschnitts 64 bildet eine Stirnseite 70 der Pendelrolle 60. Die Grundfläche des Rollenabschnitts 64 ist dem Rollenabschnitt 66 zugewandt. Die Mantelfläche des Rollenabschnitts 64 bildet eine Rollfläche 72 des Rollenabschnitts 64. Die Rollfläche 72 des Rollenabschnitts 64 ist in Erstreckungsrichtung der Pendelrollendrehachse 62 eben. Der Rollenabschnitt 66 weist eine kreiszylinderartige Form auf. Der Rollenabschnitt 66 weist eine Mantelfläche auf. Die Mantelfläche des Rollenabschnitts 66 bildet eine Rollfläche 74 des Rollenabschnitts 66. Die Rollfläche 74 des Rollenabschnitts 66 ist in Erstreckungsrichtung der Pendelrollendrehachse 62 eben. Der Rollenabschnitt 68 weist eine kreiskegelstumpfartige Form auf. Der Rollenabschnitt 68 weist eine Grundfläche, eine Deckfläche und eine Mantelfläche auf. Die Deckfläche des Rollenabschnitts 68 bildet eine Stirnseite 76 der Pendelrolle 60. Die Grundfläche des Rollenabschnitts 68 ist dem Rollenabschnitt 66 zugewandt. Die Mantelfläche des Rollenabschnitts 68 bildet eine Rollfläche 78 des Rollenabschnitts 68. Die Rollfläche 78 des Rollenabschnitts 68 ist in Erstreckungsrichtung der Pendelrollendrehachse 62 eben.

Die Pendelrolle 60 weist einen Bund 80 auf. Der Bund 80 ist zwischen dem Rollenabschnitt 64 und dem Rollenabschnitt 66 angeordnet. Der Bund 80 grenzt die Rollfläche 72 und die Rollfläche 74 voneinander ab. Der Bund 80 weist eine nach radial außen abnehmende Breite auf. Der Bund 80 weist schräge Anlaufseiten für das Pendelmasseträgerteil und/oder die Pendelmasse auf. Die Pendelrolle 60 weist einen Bund 82 auf. Der Bund 82 ist zwischen dem Rollenabschnitt 66 und dem Rollenabschnitt 68 angeordnet. Der Bund 82 grenzt die Rollfläche 74 und die Rollfläche 78 voneinander ab. Der Bund 82 weist eine nach radial außen abnehmende Breite auf. Der Bund 82 weist schräge Anlaufseiten für das Pendelmasseträgerteil und/oder die Pendelmasse auf.

Die Pendelrolle 60 ist mit dem Rollenabschnitt 64 an einem Pendelmasseteil 84 einer Pendelmasse, wie Pendelmasse 11, 12, 13, 14 gemäß Fig. 1 oder Fig. 2, angeordnet. Die Pendelrolle 60 ist mit dem Rollenabschnitt 68 an einem Pendelmasseteil 86 einer Pendelmasse, wie Pendelmasse 11, 12, 13, 14 gemäß Fig. 1 oder Fig. 2, angeordnet. Die Pendelrolle 60 ist mit dem Rollenabschnitt 66 an einem Pendelmasseträgerteil 88, wie Pendelmasseträgerteil 2 gemäß Fig. 1 oder Fig. 2, angeordnet.

Das Pendelmasseteil 84 weist eine Durchbrechung 90 auf. In der Durchbrechung 90 ist der Rollenabschnitt 64 der Pendelrolle 60 aufgenommen. Die Durchbrechung 90 ist durch Stanzen hergestellt. Die Durchbrechung 90 weist einen dem Bund 80 zugewandten Rand 92 auf. Der Rand 92 ist verrundet. Der Rand 92 ist mithilfe eines Stanzeinzugs verrundet. Das Pendelmasseteil 86 weist eine Durchbrechung 94 auf. In der Durchbrechung 94 ist der Rollenabschnitt 68 der Pendelrolle 60 aufgenommen. Die Durchbrechung 94 ist durch Stanzen hergestellt. Die Durchbrechung 94 weist einen dem Bund 82 zugewandten Rand 96 auf. Der Rand 96 ist verrundet. Der Rand 96 ist mithilfe eines Stanzeinzugs verrundet.

### Bezugszeichenliste

- 1: Fliehkraftpendeleinrichtung
- 2: Pendelmasseträgerteil
- 4: Kreisringscheibe
- 6: radialer Ansatz
- 7: radialer Ansatz
- 11: Pendelmasse, Pendelmasseteil
- 12: Pendelmasse
- 13: Pendelmasse, Pendelmasseteil
- 14: Pendelmasse
- 21: Pendelmasseteil
- 23: Pendelmasseteil
- 25: Pendelrolle
- 26: Pendelrolle
- 27: Laufbahn
- 28: Laufbahn
- 30: Stufenbolzen
- 31: Stufenbolzen
- 32: Stufenbolzen
- 33: Aufbruch
- 35: Pendelrolle
- 36: Pendelrolle
- 37: Laufbahn
- 38: Laufbahn
- 40: Stufenbolzen
- 41: Stufenbolzen
- 42: Stufenbolzen
- 44: axiales Anlaufelement
- 45: axiales Anlaufelement
- 46: axiales Anlaufelement
- 48: Bolzen
- 49: Bolzenkopf
- 50: Bolzen
- 51: Bolzenkopf
- 60: Pendelrolle
- 62: Pendelrollendrehachse
- 64: erster Rollenabschnitt
- 66: zweiter Rollenabschnitt
- 68: erster Rollenabschnitt
- 70: Stirnseite
- 72: Rollfläche
- 74: Rollfläche
- 76: Stirnseite
- 78: Rollfläche
- 80: Bund
- 82: Bund
- 84: Pendelmasseteil
- 86: Pendelmasseteil
- 88: Pendelmasseträgerteil
- 90: Durchbrechung
- 92: Rand
- 94: Durchbrechung
- 96: Rand

## Patentansprüche

1. Pendelrolle (25, 26, 35, 36, 60) für eine Fliehkraftpendeleinrichtung (1) mit wenigstens einer Pendelmasse (11, 12, 13, 14, 84, 86) und einem Pendelmasseträgerteil (2, 88) aufweisend eine Pendelrollendrehachse (62), zwei erste Rollenabschnitte (64, 68) und einen in Erstreckungsrichtung der Pendelrollendrehachse (62) zwischen den ersten Rollenabschnitten (64, 68) angeordneten zweiten Rollenabschnitt (66), wobei die Pendelrolle (25, 26, 35, 36, 60) eine fassartige Form aufweist, **dadurch gekennzeichnet, dass** die ersten Rollenabschnitte (64, 68) jeweils eine kegelstumpfartige Form mit einer Mantelfläche aufweisen, die eine Rollfläche (72, 78) des jeweiligen ersten Rollenabschnitts (64, 68) bildet, und der zweite Rollenabschnitt (66) eine zylinderartige Form mit einer Mantelfläche aufweist, die eine Rollfläche (74) des zweiten Rollenabschnitts (66) bildet.

2. Pendelrolle (25, 26, 35, 36, 60) nach einem der vorhergehenden Ansprüche, **dadurch gekennzeichnet, dass** die ersten Rollenabschnitte (64, 68) jeweils eine kegelstumpfartige Form mit eine Grundfläche und einer Deckfläche aufweisen und die Grundflächen jeweils zu dem zweiten Rollenabschnitt (66) hin gerichtet sind.

3. Pendelrolle (25, 26, 35, 36, 60) nach einem der vorhergehenden Ansprüche, **dadurch gekennzeichnet, dass** die ersten Rollenabschnitte (64, 68) jeweils eine kegelstumpfartige Form mit einer Neigung von ca. 1:10 bis ca. 1: 50, insbesondere von ca. 1:20 bis ca. 1:40, aufweisen.

4. Pendelrolle (25, 26, 35, 36, 60) nach einem der vorhergehenden Ansprüche, **dadurch gekennzeichnet, dass** die Rollflächen (72, 74, 78) der ersten Rollenabschnitte (64, 68) und/oder des zweiten Rollenabschnitts (66) in Erstreckungsrichtung der Pendelrollendrehachse (62) jeweils eben, konkav oder konvex geformt sind.

5. Pendelrolle (25, 26, 35, 36, 60) nach einem der vorhergehenden Ansprüche, **dadurch gekennzeichnet, dass** zwischen den ersten Rollenabschnitten (64, 68) und dem zweiten Rollenabschnitt (66) jeweils ein Bund (80, 82) angeordnet ist.

6. Fliehkraftpendeleinrichtung (1), insbesondere für einen Antriebsstrang eines brennkraftmaschinengetriebenen Kraftfahrzeugs, aufweisend ein um eine Drehachse drehbares Pendelmassenträgerteil (2, 88) und wenigstens eine an dem Pendelmassenträgerteil (2, 88) unter Fliehkrafteinwirkung verlagerbar angeordnete Pendelmasse (11, 12, 13, 14, 84, 86), **dadurch gekennzeichnet, dass** die wenigstens eine Pendelmasse (11, 12, 13, 14, 84, 86) mithilfe wenigstens einer Pendelrolle (25, 26, 35, 36, 60) nach einem der vorhergehenden Ansprüche an dem Pendelmassenträgerteil (2, 88) geführt ist.

7. Fliehkraftpendeleinrichtung (1) nach Anspruch 6, **dadurch gekennzeichnet, dass** das Pendelmassenträgerteil (2, 88) und/oder die wenigstens eine Pendelmasse (11, 12, 13, 14, 84, 86) wenigstens eine Durchbrechung (90, 94) zur Aufnahme eines ersten Rollenabschnitts (64, 68) der wenigstens einen Pendelrolle (25, 26, 35, 36, 60) aufweist und die Durchbrechung (90, 94) einen verrundeten Rand (92, 96) aufweist.

## Claims

1. Self-aligning roller (25, 26, 36, 60) for a centrifugal force pendulum device (1) with at least one pendulum mass (11, 12, 13, 14, 84, 86) and a pendulum mass carrier part (2, 88) having a self-aligning roller rotational axis (62), two first roller sections (64, 68) and a second roller section (66) which is arranged between the first roller sections (64, 68) in the direction of extent of the self-aligning roller rotational axis (62), the self-aligning roller (25, 26, 35, 36, 60) having a barrel-like shape, **characterized in that** the first roller sections (64, 68) in each case have a frustoconical shape with a circumferential face which forms a rolling face (72, 78) of the respective first roller section (64, 68), and the second roller section (66) has a cylindrical shape with a circumferential face which forms a rolling face (74) of the second roller section (66).

2. Self-aligning roller (25, 26, 35, 36, 60) according to one of the preceding claims, **characterized in that** the first roller sections (64, 68) in each case have a frustoconical shape with a bottom face and a top face, and the bottom faces are oriented in each case towards the second roller section (66).

3. Self-aligning roller (25, 26, 35, 36, 60) according to either of the preceding claims, **characterized in that** the first roller sections (64, 68) in each case have a frustoconical shape with a gradient of from approximately 1:10 to approximately 1:50, in particular of from approximately 1:20 to approximately 1:40.

4. Self-aligning roller (25, 26, 35, 36, 60) according to one of the preceding claims, **characterized in that** the rolling faces (72, 74, 78) of the first roller sections (64, 68) and/or the second roller section (66) are in each case shaped in a planar, concave or convex manner in the direction of extent of the self-aligning roller rotational axis (62).

5. Self-aligning roller (25, 26, 35, 36, 60) according to one of the preceding claims, **characterized in that** in each case one collar (80, 82) is arranged between the first roller sections (64, 68) and the second roller section (66).

6. Centrifugal force pendulum device (1), in particular for a drive train of a motor vehicle which is driven by internal combustion engine, having a pendulum mass carrier part (2, 88) which can be rotated about a rotational axis, and at least one pendulum mass (11, 12, 13, 14, 84, 86) which is arranged such that it can be moved on the pendulum mass carrier part (2, 88) under the action of centrifugal force, **characterized in that** the at least one pendulum mass (11, 12, 13, 14, 84, 86) is guided on the pendulum mass carrier part (2, 88) with the aid of at least one self-aligning roller (25, 26, 35, 36, 60) according to one of the preceding claims.

7. Centrifugal force pendulum device (1) according to Claim 6, **characterized in that** the pendulum mass carrier part (2, 88) and/or the at least one pendulum mass (11, 12, 13, 14, 84, 86) have/has at least one aperture (90, 94) for receiving a first roller section (64, 68) of the at least one self-aligning roller (25, 26, 35, 36, 60), and the aperture (90, 94) has a rounded edge (92, 96).

## Revendications

1. Galet pendulaire (25, 26, 35, 36, 60) pour un dispositif à pendule centrifuge (1) avec au moins une masse pendulaire (11, 12, 13, 14, 84, 86) et une partie de support de masse pendulaire (2, 88) comportant un axe de rotation de galet pendulaire (62), deux premières sections de galet (64, 68) et une deuxième section de galet (66) disposée entre les premières sections de galet (64, 68) dans la direction d'extension de l'axe de rotation de galet pendulaire (62), le galet pendulaire (25, 26, 35, 36, 60) présentant une forme de type fût, **caractérisé en ce que** les premières sections de galet (64, 68) présentent respectivement une forme de type tronc de cône avec une surface d'enveloppe formant une surface de roulement (72, 78) de la première section de galet (64, 68) respective et la deuxième section de galet (66) présentant une forme cylindrique avec une surface d'enveloppe formant une surface de roulement (74) de la deuxième section de galet (66).

2. Galet pendulaire (25, 26, 35, 36, 60) selon l'une quelconque des revendications précédentes, **caractérisé en ce que** les premières sections de galet (64, 68) présentent respectivement une forme de type tronc de cône avec une surface de base et une surface de recouvrement et les surfaces de base étant respectivement orientées vers la deuxième section de galet (66).

3. Galet pendulaire (25, 26, 35, 36, 60) selon l'une quelconque des revendications précédentes, **caractérisé en ce que** les premières sections de galet (64, 68) présentent respectivement une forme de type tronc de cône avec une proportion d'environ 1:10 à environ 1:50, notamment d'environ 1:20 à environ 1:40.

4. Galet pendulaire (25, 26, 35, 36, 60) selon l'une quelconque des revendications précédentes, **caractérisé en ce que** les surfaces de roulement (72, 74, 78) des premières sections de galet (64, 68) et/ou de la deuxième section de galet (66) sont respectivement formées de façon plate, concave ou convexe dans la direction d'extension de l'axe de rotation de galet pendulaire (62).

5. Galet pendulaire (25, 26, 35, 36, 60) selon l'une quelconque des revendications précédentes, **caractérisé en ce que** respectivement un épaulement (80, 82) est disposé entre les premières sections de galet (64, 68) et la deuxième section de galet (66).

6. Dispositif à pendule centrifuge (1), notamment pour une chaîne cinématique d'un véhicule automobile entraîné par moteur à combustion interne, comportant une partie de support de masse pendulaire (2, 88) pouvant tourner autour d'un axe de rotation et au moins une masse pendulaire (11, 12, 13, 14, 84, 86) disposée de façon à pouvoir être déplacée au niveau de la partie de support de masse pendulaire (2, 88) sous l'action d'une force centrifuge, **caractérisé en ce que** l'au moins une masse pendulaire (11, 12, 13, 14, 84, 86) est guidée au niveau de la partie de support de masse pendulaire (2, 88) à l'aide d'au moins un galet pendulaire (25, 26, 35, 36, 60) selon l'une quelconque des revendications précédentes.

7. Dispositif à pendule centrifuge (1) selon la revendication 6, **caractérisé en ce que** la partie de support de masse pendulaire (2, 88) et/ou l'au moins une masse pendulaire (11, 12, 13, 14, 84, 86) comporte au moins une ouverture (90, 94) pour recevoir une première section de galet (64, 68) de l'au moins un galet pendulaire (25, 26, 35, 36, 60) et l'ouverture (90, 94) présentant un bord (92, 96) arrondi.
